# EUROPEAN PATENT SPECIFICATION

(11) **EP 0 675 269 B1**
(45) Date of publication and mention of the grant of the patent: **07.10.1998**
(21) Application number: 95301923.9
(22) Date of filing: 23.03.1995
(51) Int. Cl.: F01P 11/04, F01M 11/02, F16L 41/03

(54) **Connection arrangement for pressure medium channels in a diesel engine**
Verbindungsanordnung für Druckmediumkanäle in einem Dieselmotor
Dispositif de connexion pour des canaux à liquide sous pression dans un moteur à diesel

(30) Priority: 29.03.1994 FI 941450
(43) Date of publication of application: 04.10.1995
(73) Proprietor: Wärtsilä NSD OY AB, 00530 Helsinki (FI)
(72) Inventor: Nurmi, Hannu, SF-65350 Vaasa (FI); Jansson, Sven, SF-65200 Vaasa (FI)
(74) Representative: Newby, Martin John

(56) References cited:
- EP-A- 0 034 996
- DE-A- 3 203 964
- FR-A- 908 144
- GB-A- 580 619
- GB-A- 702 074
- GB-A- 1 213 529

## Description

This invention relates to an engine block of a diesel engine, the engine block being in accordance with the preamble of claim 1.

The invention relates especially to large diesel engines, which in this specification typically refer, for example, to the main or auxiliary engines in ships or to engines for power plants for the production of heat and/or electricity.

In large turbocharged diesel engines it is necessary to cool both the charge air and the cooling oil. Normally cooling water, at both the inlet and outlet sides, is connected to coolers by means of separate pipes, which provides a complicated and, because of the costs, a disadvantageous solution. An alternative solution is to arrange for ducts to conduct cooling water within the engine block, which ducts, with advantage, are incorporated in the engine block during its casting. From the viewpoint of space requirements, the ducts in this case are with advantage arranged side by side in the engine block. A problem arises in this case of how to conduct cooling water from the parallel ducts into the coolers located outside the engine block so that the cooling water on the inlet and outlet sides are not mixed with each other.

In practice the cooling water is first circulated through the charge air cooler and only then through the oil cooler. However, the order of the coolers in the longitudinal direction of the engine may change, which poses additional problems with the circulation of cooling water.

An aim of the invention is to develop an improved engine block and in particular a connection arrangement for pressure medium ducts which are located in parallel in the engine block and by means of which inter alia the problems discussed above can be eliminated. In addition the engine block should be advantageous with regard to manufacturing costs and be versatile in providing alternatives for flow guidance for implementing different connection requirements for pressure medium flows.

The aims of the invention are met as is set out in at least the ensuing claim 1.

According to the invention there is provided an engine block as claimed in the ensuing claim 1. In this way the desired flow alternatives can be implemented by forming the connection chamber to comprise certain sealing surfaces and selecting a duct assembly suitable in each case so that it includes flow guidance apertures as required by the pressure medium flows.

The engine block includes with advantage a duct assembly, which is sealed to the connection aperture and to the wall between the ducts so that it connects only the rearmost duct to the connection aperture leading out. If then it is not desirable that the flow in the foremost duct is blocked, the connection chamber can be formed so that it allows through-flow in the foremost duct past the connection aperture and the duct assembly installed in the connection chamber.

The engine block can further include a duct assembly, which is sealed to the connection aperture and to the wall between the ducts and is provided with flow guidance apertures so that it connects only the foremost duct to the connection aperture leading out.

In accordance with one embodiment the connection chamber is provided with sealing surfaces arranged in the connection aperture and in the wall between the ducts and with sealing surfaces arranged at the position of at least one duct preventing, with the duct assembly, flow in the duct in question past the duct assembly, whereby the duct assembly correspondingly is provided with at least one flow guidance aperture located at the mantle surface thereof at the position of the duct in question for leading the flow out from the duct in question, for instance for connecting the duct to the connection aperture leading out or for leading the flow from one duct to another.

The sealing surfaces can be arranged at the position of both the ducts, whereby by providing the duct assembly with two flow guidance apertures, one at the position of either of the ducts, the flow can be let from one duct to the other. At the same time the connection between both the ducts and the connection aperture can be blocked. Hereby the flow can be led to the other side of the ducts, for instance to be led further into a device or part of the engine, or the direction of the flow can be changed.

The present invention also relates to a diesel engine provided with an engine block according to the invention.

Embodiments of the invention will now be further described, by way of example, with reference to the accompanying drawings, in which:
Figures 1 to 4 show different connection chamber solutions for tube assemblies included in a connection arrangement for pressure medium ducts of an engine block according to the invention and seen as a transverse cross-section with regard to the ducts;
Figures 5 and 6 show cross sections E-E and F-F of Figures 1 to 4;
Figures 7a to 7g show different tube assemblies to be applied for different flow alternatives;
Figure 8 shows in principle how to apply the connection arrangement in a large diesel engine for a case in which parallel ducts in the engine block are included in a cooling medium circuit, to which are connected, in successive order, first a charge air cooler for a turbocharger and than an oil cooler; and
Figure 9 shows a modification of the case in Figure 8, in which the mutual location of the coolers in the engine is reversed.

In the drawings, reference numeral 1 indicates an engine block of a large diesel engine and includes pressure medium ducts 2 and 3 arranged generally parallel to each other in the longitudinal direction of the engine block. These ducts are formed during casting of the engine block and, at the same time, the ducts are provided with connecting chambers at locations planned in advance, and for a selected purpose, for leading pressure medium flows by means of connecting tubes through desired devices, for example coolers connected to the engine, as is schematically shown in Figures 8 and 9.

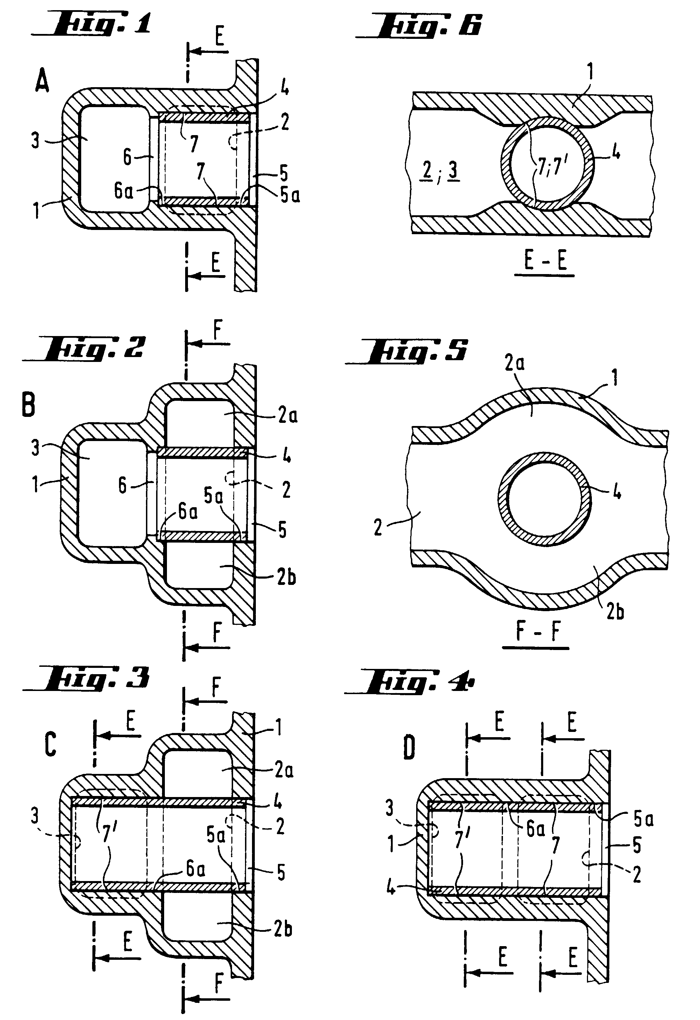

Each connecting chamber includes a connection aperture 5, through which a tube assembly 4 selected for the purpose in each case is installed to guide pressure medium flowing in the ducts 2 and 3 in a desired way. The connection chamber also has an aperture 6 located in a separating wall between the ducts 2 and 3 and connecting the ducts with each other. The apertures 5 and 6 are equipped with sealing surfaces 5a and 6a, respectively, for sealing the tube assembly 4 located in the connection chamber. Additionally, the connecting chamber may be equipped, at the position of either one or both of the ducts, with sealing surfaces 7 and 7' arranged at the upper and/or lower wall(s). These sealing surfaces 7 and 7', together with the tube assembly 4, prevent flow in the duct past the tube assembly, whereby the flow may be guided in a desired manner by means of flow guiding apertures, located at different places in the tube assembly. If necessary, however, the outermost duct 2 of the engine block may be designed to comprise an expansion portion 2a and/or 2b for guiding the flow in the duct 2 past the tube assembly, for example as shown in Figures 2, 3 and 5.

Figures 7a to 7g show different tube assemblies 4, which can be sealed to the sealing surfaces 5a and 6a of the connection chamber and additionally, if necessary, to the sealing surfaces 7 and/or 7' and which are equipped with flow guiding apertures positioned in different places for applying the desired flow alternatives. The flow paths in each case are shown by arrows. The reference numeral 4a indicates a flow guidance aperture provided in the mantle surface of the tube assembly and 4b correspondingly indicates a flow guidance aperture provided in the end surface of the tube assembly. The reference numeral 4c indicates a blocking wall arranged at the gable part of the tube assembly for preventing flow. The Figures also show schematically the use of possible expansion portions 2a and/or 2b of the connection chamber with the tube assembly in question.

The Figures 7f and 7g show solutions for guiding pressure medium flow from one duct to another, whereby the pressure medium flow can be guided to devices located at either side of the flow ducts 2 and 3 in a desired order.

Figure 8 shows schematically an arrangement where the parallel ducts 2 and 3 in an engine block are included in a cooling medium circuit and are connected one after another firstly to a charge air cooler 8 of a turbocharger (not shown) and then to an oil cooler 9. Correspondingly Figure 9 illustrates an alternative arrangement positioned at the flywheel end of the engine. In this case the order of the coolers 8 and 9 is reversed in the feeding direction of the pressure medium flow, which must be taken account of by using suitable connection chamber and tube assembly arrangements so that the flow is first led through the charge air cooler and only thereafter through the oil cooler. The flow is led into the duct 2 from the pressure side of a circulation pump (not shown) and possibly from a flow branch from a reserve pump and the duct 3 is connected to the suction side of the pump.

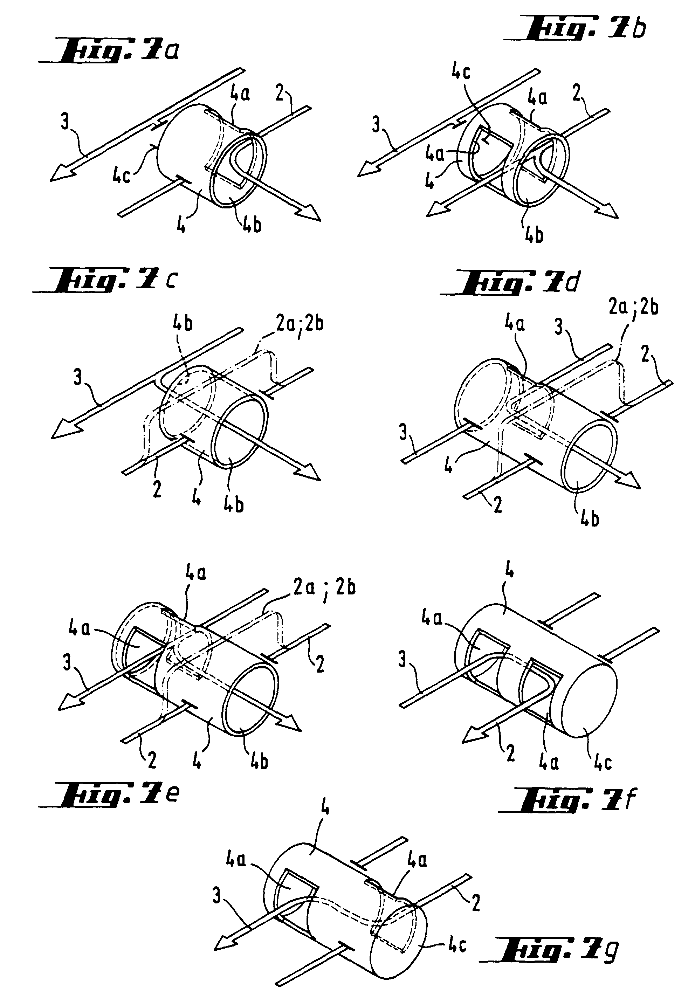

With reference to the embodiment of Figure 8, the tube assembly 10 may be in accordance with Figure 7b and the connection chamber correspondingly in accordance with Figure 1, in other words of type A. Correspondingly the tube assemblies 11 and 12 may be in accordance with Figure 7a and the connection chamber may be of type A (Figure 1). The tube assembly 13 may be in accordance with Figure 7c and the connection chamber may be of type B (Figure 2) or alternatively the tube assembly 13 may be in accordance with Figure 7d and the connection chamber may be of type C (Figure 3). The tube assembly 14 may be in accordance with Figure 7a and the connection chamber may be of type A (Figure 1).

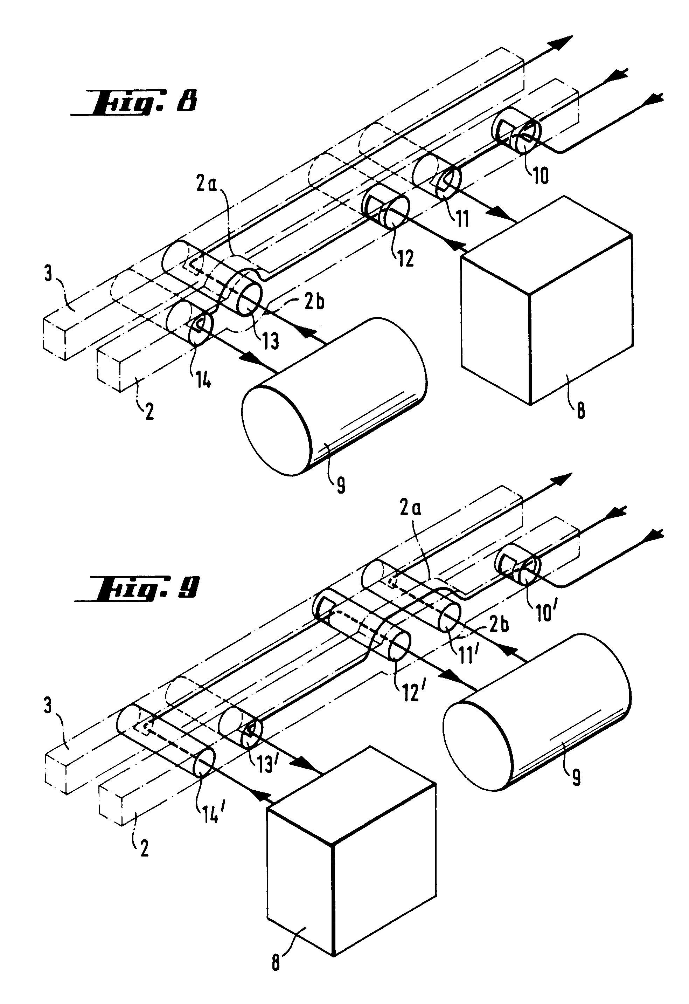

Correspondingly in the embodiment of Figure 9, the tube assembly 10' may be in accordance with Figure 7b and the connection chamber may be of type A (Figure 1). The tube assembly 11' may be in accordance with Figure 7d and the connection chamber may be of type C (Figure 3). The tube assembly 12' may be either in accordance with Figure 7c or in accordance with Figure 7d and the connection chamber may be of type C (Figure 3). The tube assembly 13' may be in accordance with Figure 7a and the connection chamber may be of type A (Figure 1). The tube assembly 14' may be in accordance with Figure 7d and the connection chamber may be of type D (Figure 4) or, alternatively, the tube assembly 14' may be in accordance with Figure 7c and the connection chamber may be of type A (Figure 1).

It is clear that the arrangements according to the invention are not dependent on the pressure medium used in each case but are applicable, for example, equally as well for water, oil or other pressure media. The tube assemblies are preferably cylindrical, because it is of advantage from the viewpoint of both manufacturing technique and the connection of the connection tubes.

## Claims

1. An engine block of a diesel engine comprising at least two ducts (2,3) of a pressure medium system which extend in the longitudinal direction of the engine block (1) and connection means arranged successively in the flow direction of the pressure medium circulation of the system for connecting the two ducts (2, 3) either together or separately with one or more devices or units located at the side of the ducts and included in the pressure medium system so that a desired direction of flow is accomplished and so that pressure medium flow at the inlet and outlet sides are prevented from being mixed with each other, characterised in that the connection means includes a set of different hollow duct assemblies (4) installed in connection chambers formed in the engine block at desired locations, said connection chambers connecting the ducts (2, 3) with each other and each including a connection aperture (5) on the side of the ducts for connecting the connection chamber to one of said devices or units (8,9), in that each of the duct assemblies (4) includes two or more flow guidance apertures (4a,4b) located so as to accomplish different flow alternatives, and in that each connection chamber is provided with one or more sealing surface (5a,6a,7,7') arranged to cooperate with the duct assembly (4) selected in each case so that the duct assembly (4) is sealed according to need to the connection aperture (5), to a wall between the ducts and/or to the upper and/or lower walls of at least one of the ducts.

2. An engine block according to claim 1, characterised in that the hollow duct assemblies (4) are cylindrical.

3. An engine block according to claim 1 or 2, characterised in that at least one of said duct assemblies (4) is sealed to the connection aperture (5) and to the wall between the ducts so that it connects only the rearmost duct (3) to the connection aperture (5) leading out.

4. An engine block according to claim 3, characterised in that the connection chamber in which said at least one duct assembly (4) is installed is formed so that it allows through-flow in the foremost duct (2) past the connection aperture (5) and the said one duct assembly (4) concerned .

5. An engine block according to claim 1 or 2, characterised in that at least one further duct assembly (4) is sealed to the connection aperture (5) and to the wall between the ducts and is provided with flow guidance apertures (4a,4b) so that it connects only the foremost duct (2) to the connection aperture (5) leading out.

6. An engine block according to claim 1 or 2, characterised in that at least one of the connection chambers is provided with sealing surfaces (5a,6a), arranged in the connection aperture (5) and in the wall between the ducts (2,3), and with sealing surfaces (7,7') arranged at the position of at least one duct preventing, together with the duct assembly (4), flow in the duct in question past the duct assembly, whereby the duct assembly (4) correspondingly is provided with at least one flow guidance aperture (4a) located at the mantle surface thereof at the position of the duct in question for leading the flow out from the duct in question, for instance for connecting the duct to the connection aperture (5) leading out or for leading the flow from one duct to another.

7. An engine block according to claim 6, characterised in that said sealing surfaces (5a,6a,7,7') are arranged at the position of both the ducts (2,3) and in that the duct assembly (4) includes two flow guidance apertures (4a), one at the position of either of the ducts for leading the flow from one duct to the other, whereby at the same time the connection between both ducts and the connection aperture (5) is blocked.

8. A diesel engine having an engine block (1) as claimed in any one of the preceding claims.

## Patentansprüche

1. Motorblock eines Dieselmotors, der folgendes umfaßt: mindestens zwei Kanäle (2, 3) eines Druckmittelsystems, die sich in Längsrichtung des Motorblocks (1) erstrecken, und Verbindungsmittel, die nacheinander in Strömungsrichtung der Druckmittelzirkulation des Systems zur Verbindung der beiden Kanäle (2, 3) entweder zusammen oder getrennt mit einer oder mehreren Vorrichtungen oder Einheiten, die sich an der Seite der Kanäle befinden und im Druckmittelsystem enthalten sind, so daß eine gewünschte Strömungsrichtung erhalten wird und so daß ein Vermischen einer Druckmittelströmung auf der Einlaß- und Auslaßseite verhindert wird, angeordnet sind, dadurch gekennzeichnet, daß das Verbindungsmittel einen Satz verschiedener hohler Kanalanordnungen (4) enthält, die an gewünschten Stellen in im Motorblock ausgebildeten Verbindungskammern installiert sind, wobei die Verbindungskammern die Kanäle (2, 3) miteinander verbinden und auf der Seite der Kanäle jeweils eine Verbindungsöffnung (5) zur Verbindung der Verbindungskammer mit einer der Vorrichtungen oder Einheiten (8, 9) aufweisen, daß jede der Kanalanordnungen (4) zwei oder mehr Strömungsführungsöffnungen (4a, 4b) enthält, die so angeordnet sind, daß andere Strömungsalternativen erhalten werden, und daß jede Verbindungskammer mit einer oder mehreren Dichtungsflächen (5a, 6a, 7, 7') versehen ist, die zum derartigen Zusammenwirken mit der jeweils ausgewählten Kanalanordnung (4) angeordnet sind, daß die Kanalanordnung (4) je nach Bedarf gegenüber der Verbindungsöffnung (5), gegenüber einer Wand zwischen den Kanälen und/oder gegenüber der oberen und/oder unteren Wand mindestens eines der Kanäle abgedichtet ist.

2. Motorblock nach Anspruch 1, dadurch gekennzeichnet, daß die hohlen Kanalanordnungen (4) zylindrisch sind.

3. Motorblock nach Anspruch 1 oder 2, dadurch gekennzeichnet, daß mindestens eine der Kanalanordnungen (4) gegenüber der Verbindungsöffnung (5) und gegenüber der Wand zwischen den Kanälen abgedichtet ist, so daß sie nur den am weitesten hinten liegenden Kanal (3) mit der herausführenden Verbindungsöffnung (5) verbindet.

4. Motorblock nach Anspruch 3, dadurch gekennzeichnet, daß die Verbindungskammer, in der die mindestens eine Kanalanordnung (4) installiert ist, so ausgebildet ist, daß sie eine Durchströmung in dem am weitesten vorne liegenden Kanal (2) an der Verbindungsöffnung (5) und der betroffenen Kanalanordnung (4) vorbei gestattet.

5. Motorblock nach Anspruch 1 oder 2, dadurch gekennzeichnet, daß mindestens eine weitere Kanalanordnung (4) gegenüber der Verbindungsöffnung (5) und der Wand zwischen den Kanälen abgedichtet ist und mit Strömungsführungsöffnungen (4a, 4b) versehen ist, so daß sie nur den am weitesten vorne liegenen Kanal (2) mit der herausführenden Verbindungsöffnung (5) verbindet.

6. Motorblock nach Anspruch 1 oder 2, dadurch gekennzeichnet, daß mindestens eine der Verbindungskammern mit Dichtungsflächen (5a, 6a), die in der Verbindungsöffnung (5) und in der Wand zwischen den Kanälen (2, 3) angeordnet sind, und mit Dichtungsflächen (7, 7'), die in der Position von mindestens einem Kanal angeordnet sind, versehen ist, die zusammen mit der Kanalanordnung (4) eine Strömung in dem betreffenden Kanal an der Kanalanordnung vorbei verhindern, weshalb die Kanalanordnung (4) dementsprechend mit mindestens einer Strömungsführungsöffnung (4a) versehen ist, die an ihrer Mantelfläche an der Position des betreffenden Kanals zum Führen der Strömung aus dem betreffenden Kanal heraus, beispielsweise zur Verbindung des Kanals mit der herausführenden Verbindungsöffnung (5) oder zum Führen der Strömung von einem Kanal zum anderen angeordnet ist.

7. Motorblock nach Anspruch 6, dadurch gekennzeichnet, daß die Dichtungsflächen (5a, 6a, 7, 7') in der Position beider Kanäle (2, 3) angeordnet sind und daß die Kanalanordnung (4) zwei Strömungsführungsöffnungen (4a) enthält, und zwar eine in der Position eines der Kanäle zum Führen der Strömung von einem Kanal zum anderen, wodurch gleichzeitig die Verbindung zwischen beiden Kanälen und der Verbindungsöffnung (5) gesperrt ist.

8. Dieselmotor mit einem Motorblock (1) nach einem der vorhergehenden Ansprüche.

## Revendications

1. Bloc moteur d'un moteur diesel comprenant au moins deux conduits (2, 3) d'un système de liquide sous pression qui s'étendent dans la direction longitudinale du bloc moteur (1) et des moyens de connexion arrangés successivement dans la direction d'écoulement de la circulation de liquide sous pression du système pour connecter les deux conduits (2, 3) soit ensemble, soit séparément, à un ou plusieurs dispositifs ou unités situés sur le côté des conduits et inclus dans le système de liquide sous pression de sorte qu'une direction souhaitée d'écoulement soit obtenue et ainsi que les écoulements de liquide sous pression au niveau des côtés d'entrée et de sortie ne puissent pas se mélanger l'un avec l'autre, caractérisé en ce que les moyens de connexion comportent un ensemble de différents assemblages de conduits creux (4) installés dans des chambres de connexion formées dans le bloc moteur en des emplacements souhaités, lesdites chambres de connexion connectant les conduits (2, 3) l'un à l'autre et chacune incluant une ouverture de connexion (5) sur le côté des conduits pour connecter la chambre de connexion à l'un desdits dispositifs ou unités (8, 9), en ce que chacun des assemblages de conduits (4) comporte deux ouvertures de guidage de l'écoulement ou plus (4a, 4b) situées de manière à produire des alternatives d'écoulement différentes, et en ce que chaque chambre de connexion est pourvue d'une ou plusieurs surfaces d'étanchéité (5a, 6a, 7, 7') arrangées pour coopérer avec l'assemblage de conduit (4) sélectionné dans chaque cas de telle sorte que l'assemblage de conduits (4) sélectionné dans chaque cas de sorte que l'assemblage de conduit (4) soit scellé selon les besoins à l'ouverture de connexion (5), à une paroi entre les conduits et/ou aux parois supérieure et/ou inférieure d'au moins l'un des conduits.

2. Bloc moteur selon la revendication 1, caractérisé en ce que les assemblages de conduits creux (4) sont cylindriques.

3. Bloc moteur selon la revendication 1 ou 2, caractérisé en ce qu'au moins l'un desdits assemblages de conduits (4) est scellé à l'ouverture de connexion (5) et à la paroi entre les conduits, de telle sorte qu'il connecte uniquement le conduit le plus en arrière (3) à l'ouverture de connexion (5) conduisant vers l'extérieur.

4. Bloc moteur selon la revendication 3, caractérisé en ce que la chambre de connexion dans laquelle ledit au moins un assemblage de conduits (4) est installé est formée de telle sorte qu'elle permette un passage de l'écoulement dans le conduit le plus en avant (2) au delà de l'ouverture de connexion (5) et dudit un assemblage de conduit (4) concerné.

5. Bloc moteur selon la revendication 1 ou 2, caractérisé en ce qu'au moins un assemblage de conduits (4) supplémentaire est scellé à l'ouverture de connexion (5) et à la paroi entre les conduits et est pourvu d'ouvertures de guidage de l'écoulement (4a, 4b) de sorte qu'il connecte uniquement le conduit le plus en avant (2) à l'ouverture de connexion (5) conduisant à l'extérieur.

6. Bloc moteur selon la revendication 1 ou 2, caractérisé en ce qu'au moins l'une des chambres de connexion est pourvue de surfaces d'étanchéité (5a, 6a) disposées dans l'ouverture de connexion (5) et dans la paroi entre les conduits (2, 3), et de surfaces d'étanchéité (7, 7') disposées dans la position d'au moins un conduit empêchant, conjointement à l'assemblage de conduits (4), l'écoulement dans le conduit en question au delà de l'assemblage de conduit, l'assemblage de conduits (4) étant ainsi, de manière correspondante, pourvu d'au moins une ouverture de guidage de l'écoulement (4a) située au niveau de la surface d'enveloppe de celui-ci dans la position du conduit en question pour conduire l'écoulement vers l'extérieur depuis le conduit en question, par exemple pour connecter le conduit à l'ouverture de connexion (5) conduisant vers l'extérieur ou pour conduire l'écoulement d'un conduit à un autre.

7. Bloc moteur selon la revendication 6, caractérisé en ce que lesdites surfaces d'étanchéité (5a, 6a, 7, 7') sont arrangées dans la position des deux conduits (2, 3) et en ce que l'assemblage de conduits (4) comporte deux ouvertures de guidage de l'écoulement (4a), une dans la position de l'un ou l'autre des conduits pour conduire l'écoulement depuis un conduit jusqu'à l'autre, la connexion entre les deux conduits et l'ouverture de connexion (5) étant en même temps bloquées.

8. Moteur diesel ayant un bloc moteur (1) selon l'une quelconque des revendications précédentes.
